Europäisches Patentamt

European Patent Office

Office européen des brevets

(11) Publication number: **0 111 370**
**B1**

(12) **EUROPEAN PATENT SPECIFICATION**

(45) Date of publication of patent specification: **31.01.90**

(21) Application number: **83201724.8**

(22) Date of filing: **05.12.83**

(51) Int. Cl.⁵: **F 16 J 15/34,** F 16 J 15/16, B 62 D 55/088

(54) Gasket with thrust compensator ring.

(30) Priority: **09.12.82 IT 2367182 u**

(43) Date of publication of application:
**20.06.84 Bulletin 84/25**

(45) Publication of the grant of the patent:
**31.01.90 Bulletin 90/05**

(84) Designated Contracting States:
**AT BE CH DE FR GB LI LU NL SE**

(56) References cited:
**WO-A-82/03670**
**DE-A-2 808 658**
**DE-A-2 930 525**
**FR-A-1 417 063**

(73) Proprietor: **Berco S.p.A.**
**Via 1 Maggio 237**
**I-44034 Copparo Ferrara (IT)**

(72) Inventor: **Bisi, Ugo**
**Via Canapa 45**
**I-44100 Ferrara (IT)**

(74) Representative: **Martegani, Franco et al**
**Ing. Barzanò & Zanardo Milano S.p.A. Via**
**Borgonuovo, 10**
**I-20121 Milano (IT)**

Courier Press, Leamington Spa, England.

## Description

The present invention relates to a seal assembly between two mechanical parts pivotally connected to each other, according to the preamble of Claim 1.

A seal assembly of this type is known from DE—A—2 930 525 and WO—A—8 203 670.

In the seal assembly of DE—A—2 930 525 the configuration of the seal ring and the elastic pressure ring is such that the pressure line of the elastic pressure ring extends approximately parallel to the longitudinal axis of the pin of the coupling and through the contact surface of the sealing lip. Therefore, in operating conditions, the lip is pressed perpendicularly against the sealing surface and seal is provided at this area. There is practically no appreciable sealing action between the seal ring and the spacer member, which contact each other along cylindrical portions, because of the missing of an appreciable radial pressure provided by the elastic ring which is not radially pressed inside except at a small portion lying partly outside the region of mutual contact with the seal ring.

WO—A—8 203 670 discloses a seal assembly of the same type, in which no pressure is provided at all from the seal ring against the spacer member.

These known sealing assemblies further have the drawback that they lose their sealing action with time because of the wear which they are subjected to.

The object of the present invention is to provide seal assembly of the type adapted to guarantee the seal between two coupled mechanical parts undergoing rotation of an intermittent kind about the same axis, and which has improved sealing capacity even if subjected to wear, to efficiently prevent external material such as earth, water and impurities in general such as can damage the coupling surfaces from entering the lubricant chamber, and to also prevent the lubricant in the coupling from escaping from the chamber.

More specifically, the assembly is intended for application to links of the tracks of tracked vehicles, in which a cavity within the pin supplies the pin/rotation support coupling with lube-oil.

To achieve the aforesaid object the present invention provides a seal assembly having the characterising features of Claim 1.

In the assembly of the present invention the flexional deformation to which the seal ring undergoes in the loaded state owing to its inclined inner surface adds in maintaining the pressure action on the surfaces to be sealed, and wear of the sealing portions of the seal ring does not result in loss of sealing capacity because of the possibility of the sealing ring to change its flexed configuration to maintain seal engagement even if sealing portions are worn.

The configuration of the seal ring according to the present invention further has more efficacy in preventing abrasive material, earth, sand; water and other foreign materials from entering the sealed chamber because if external material tends to penetrate into the lubricant chamber between the seal ring and the sealing surface, the flexed configuration of the seal ring opposes the foreign material a greater resitance because any tendency to enter the chamber at that point would encounter an increasing reaction of the seal ring which would be urged into a more flexed position.

The structural and functional characteristics of a seal assembly according to the invention will be more fully understood from the following description, with reference to the attached drawings, in which:

Figure 1 is a partially sectional view showing a coupling of two half-links with a seal assembly according to the invention;

Figure 2 is an enlarged section taken through the lines II—II of Figure 1;

Figures 3, 4 and 5 illustrate the same particulars as per Figure 2 in different positions of mounting, and

Figure 6 shows the same particulars as in Figure 3, but with a seal ring comprising two sealing lips.

With reference to the drawings, in a coupling 10 between two links of a track for tracked vehicles there are coupled two half-links 11 and 12, pivotable about one and the same axis. The half-link 11 is fitted directly on a central pin 13 of the track, while the half-link 12 is fitted on a bushing 14, which in turn rotates on the pin 13.

Between the bushing 14 and the half-link 11 there is defined a lubricant chamber in which there are positioned in coaxial relation a spacer member or shim 15 and a gasket 16. The spacer member 15 surrounds the pin 13 and the gasket 16 consists of an elastic ring 17 and a seal ring 18 engaging each other. The elastic ring 17 is essentially toroidal, made of highly yieldable material and has a circular section.

The seal ring 18 is made of abrasion-resistant material and has an essentially "J"-shaped cross-section, bearing a series of projections and seal surfaces and including an inclined portion facing the spacer member 15 and withdrawing therefrom in the direction towards a sealing surface 29 of the bushing 14.

The "J"-shaped seal ring 18 has at its upper portion a flat surface 19, from which on one side extends a cylindrical surface 20 perpendicular to said surface 19, and, on the other side, a sharp projection or rim 21.

Parallel frusto-conical internal and external surfaces 22 and 23 extend respectively from the flat portion 20 and from the sharp projection or rim 21. The surface 22, forming said inclined portion of the seal ring 18, connects with a portion 24 having a triangular cross section, while the surface 23 is connected to a flat surface 25, above the portion 24.

More exactly, the gasket 16 is positioned between an external lateral surface 26 of the spacer member 15, an annular radial surface 27 and an internal lateral surface 28 of the half-link 11, and the annular radial surface 29 of the bushing 14.

The basic annular surfaces 30 of the spacer member will, when mounting is complete, abut the surfaces 27 and 29.

The gasket 16 is mounted in the following manner.

The bushing 14 carrying the related half-link 12 is fitted onto the pin 13.

The following are then fitted: the spacer member 15, the seal ring 18 and the elastic ring 17, which is arranged around the "J"-shaped seal ring 18.

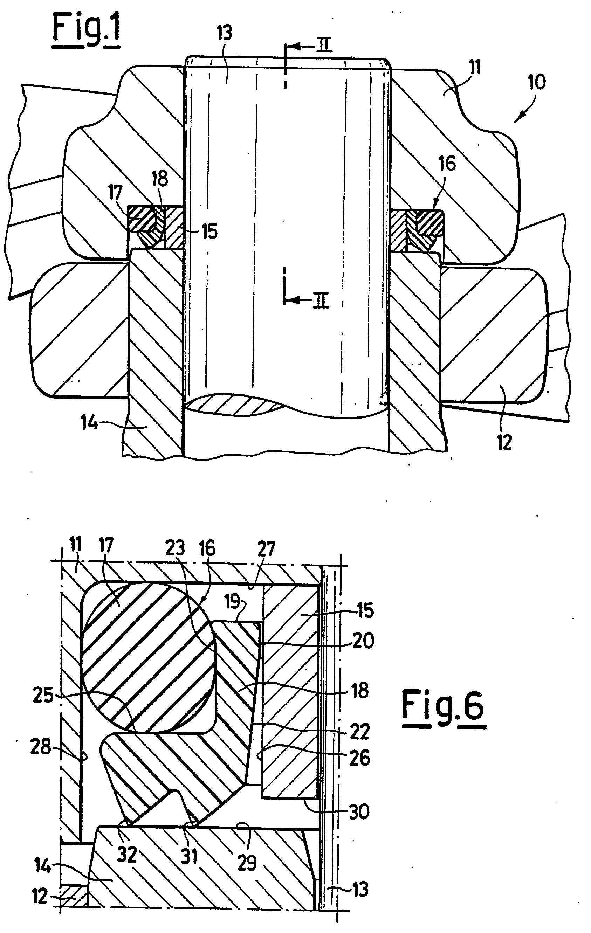

By means of a press, the half-link 11 is then fitted onto the pin 13 which, when mounting is complete, will form a coupling 10 as illustrated in Figure 1.

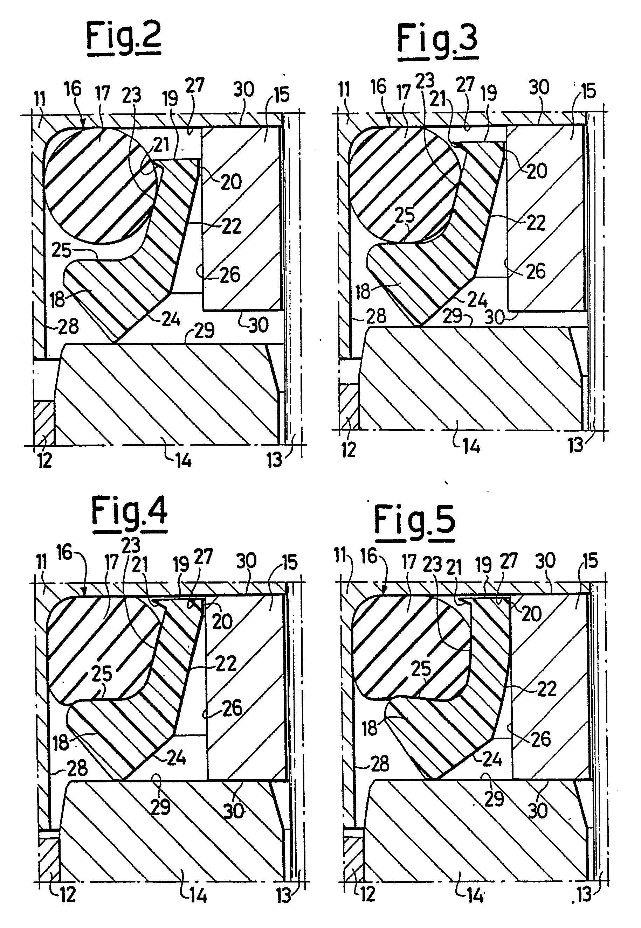

During a first phase of said forced fitting, when the gasket 16 is still in a rest position, the mounting is as shown in Figure 2.

During the later phase of compression of the gasket 16, i.e. with continuation of the forced fitting of the half link 11 onto the pin 13, the elastic ring 17 made of yieldable material starts to deform and to adapt to the surfaces 27 and 28 of the half-link 11 and to the surfaces 23 and 25 of the seal ring 18. When the half-link 11 has been fully forced onto the pin 13, the gasket 16 is fully compressed (Figure 4).

The elastic ring 17 has fully adhered to the surfaces 27 and 28 of the half-link 11 and has compressed the surfaces 23 and 25 of the seal ring 18 generating the thrust necessary for sealing the "V"-shaped projection 24 on the sealing surface 29 of the bushing 14 and causing the inclined seal ring 18 to be subjected to forces tending to flex it so as to increase the sealing contact area with the spacer member 15 and the sealing surface 29.

In this way the seal of the lubricant within the articulation is assured, as also the non-entry of external material such as might interfere with the rotating coupling and cause it to seize. It would also be possible to embody a seal ring 18 in relatively yieldable material, if pronounced wear of the coupled mechanical parts is foreseen, so as to guarantee a continuous seal as wear increases. An example of this last-mentioned application is illustrated in Figure 5, in which there can clearly be seen the deformations of the flexed surfaces 22 and 23 of the seal ring 18 brought to bear by the flat portion 20 on the external surface 26 of the spacer member 15.

Also worthy of note is the rim 21 on the seal ring 18, which prevents the elastic ring 17 from slipping-off during the fitting of the complete gasket and the mechanical coupling.

When the gasket 16 is mounted and compressed and there is thus perfect adherence between the elastic ring 17 and the surfaces 23 and 25 of the seal ring 18, there is also prevented thereby the entry of foreign material, for example foreign material of an abrasive kind, between the aforesaid two components of the gasket 16.

Preferably the seal ring 18 has two spaced apart lips 31, 32 (Figure 6) of substantially triangular cross section in side-by-side relationship, which come to bear upon the sealing surface 29 of the bushign 14. The lip 31 keeps the lubricant inside the articulation, and the lip 32 ensures non-entry of extraneous material, thus together both ensuring a continuous seal and a perfect adherence when the gasket is positioned and compressed.

## Claims

1. A seal assembly between two mechanical parts (11, 14) pivotally connected to each other, in particular for links of tracks of tracked vehicles, wherein the two parts (11, 14) and a pin (13) pivotally connecting them define a lubricant chamber receiving a gasket (16) and a spacer member (15) surrounding the pin (13), the gasket (16) comprising an elastic ring (17) and a seal ring (18) mutually engaging in said chamber for sealing connection of said parts (11, 14), the seal ring (18) having a generally J-shape in cross section respectively contacting said spacer member (15) and a sealing surface (29) of one (14) of said parts and the elastic ring (17) being arranged around the J-shaped seal ring (18), characterized in that the seal ring (18) has an inclined portion (surface 22) facing said spacer member (15) and withdrawing therefrom in the direction towards said sealing surface (29), whereby in the loaded state the seal ring (18) is flexed to increase sealing contact area with said spacer member (15) and said sealing surface (29).

2. A seal assembly as claimed in Claim 1, characterized in that the inclined portion of the seal ring (18) has parallel internal and external surfaces (22, 23).

3. A seal assembly as claimed in Claim 1, characterized in that the seal ring (18) has two spaced apart lips (31, 32) of substantially triangular cross section engaging said sealing surface (29).

## Patentansprüche

1. Dichtungsanordnung zwischen zwei gelenkig miteinander verbundenen mechanischen Bauteilen (11, 14), insbesondere für Glieder der Gleiskatten von Kettenfahrzeugen, wobei die beiden Bauteile (11, 14) und ein diese gelenkig miteinander verbindender Zapfen (13) eine eine Dichtung (16) und einen Distanzring (15) aufnehmende Schmiermittelkammer umschließen, die Dichtung (16) einen elastischen Ring (17) und einen Dichtungsring (18) umfaßt, welche in der Kammer zum dichtenden Verbinden der Bauteile (11, 14) aneinander anliegen, der Dichtungsring (18) mit allgemein J-förmigem Querschnitt am Distanzring (15) bzw. einer Dichtfläche (29) eines (14) der Bauteile anliegt und der elastische Ring (17) den J-förmigen Dichtungsring (18) umgibt, dadurch gekennzeichnet, daß der Dichtungsring (18) einen dem Distanzring (15) zugewendeten und sich von diesem in Richtung zur Dichtfläche (29) entfernenden geneigten Abschnitt (Fläche 22) hat, wodurch der Dichtungsring (18) im belasteten Zustand zum Vergrößern der dichtenden Berührungsfläche mit dem Distanzring (15) und mit der Dichtfläche (29) verbogen wird.

2. Dichtungsanordnung nach Anspruch 1, dadurch gekennzeichnet, daß der geneigte Abschnitt des Dichtungsringes (18) parallele Innen- und Außenflächen (22, 23) hat.

3. Dichtungsanordnung nach Anspruch 1, dadurch gekennzeichnet, daß der Dichtungsring (18), zwei in Abstand voneinander angeordnete Lippen (31, 32) mit im wesentlichen dreieckigem Querschnitt hat, welche an der Dichtfläche (29) anliegen.

**Revendications**

1. Assemblage étanche de deux éléments mécaniques (11, 14) reliés de façon pivotante l'un à l'autre, en particulier pour l'accouplement d'organes de liaison de véhicules de traction dans lequel les deux éléments (11, 14) et une broche (13), reliés les uns à l'autre de façon pivotante, définissent une chambre de lubrification contenant un joint d'étanchéité (16) et un élément d'écartement (15) entourant la broche (13), le joint d'étanchéité comprenant un anneau élastique (17) et un anneau d'étanchéité (18) s'engageant mutuellement dans ladite chambre pour réaliser l'étanchéité desdits éléments (11, 14), l'anneau d'étanchéité (18) présentant, en coupe transversale, une section en forme de "J" et étant en contact respectivement avec l'élément d'écartement (15) et une surface d'obturation (29) d'un desdits éléments (14), et l'anneau élastique (17) étant disposé autour dudit anneau d'étanchéité en forme de "J" (18) caracérisée en ce que l'anneau d'étanchéité (18) présente une partie inclinée (surface 22) faisant face audit élément d'écartement (15) et se détachant de lui dans la direction de ladite surface d'obturation (29), selon lequel, dans l'état chargé, l'anneau d'étanchéité (18) fléchit pour augmenter la zone de contact d'étanchéité avec l'élément d'écartement (15) et ladite surface d'obturation (29).

2. Assemblage étanche selon la revendication 1 caractérisé en ce que la partie inclinée de l'anneau d'échanchéité (18) présente des surfaces interne et texterne parallèles (22, 23).

3. Assemblage étanche selon la revendication 1 caractérisé en ce que l'anneau d'étanchéité (18) présente deux lèvres séparées espacées (31, 32), substantiallement triangulaire en coupe transversale, étant en contact avec ladite surface d'obturation (29).

# Fig.1

# Fig.6

# Fig.2

# Fig.3

# Fig.4

# Fig.5

2